# FASCICULE DE BREVET EUROPEEN

(11) **EP 0 588 275 B1**
(45) Date de publication et mention de la délivrance du brevet: **18.12.1996**
(21) Numéro de dépôt: 93114652.6
(22) Date de dépôt: 13.09.1993
(51) Int. Cl.: B65G 1/10, B65G 49/06

(54) **Dispositif d'entreposage à éléments de support déplaçables**
Lagereinrichtung mit fahrbaren Tragelementen
Storing device having movable support elements

(30) Priorité: 18.09.1992 IT VI920136
(43) Date de publication de la demande: 23.03.1994
(73) Titulaire: Piazza, Antonio, 36015 Schio (Vicenza) (IT)
(72) Inventeur: Piazza, Antonio, 36015 Schio (Vicenza) (IT)
(74) Mandataire: Hranitzky, Wilhelm Max

(56) Documents cités:
- EP-A- 0 506 198
- DE-U- 1 957 281
- US-A- 1 807 075
- US-A- 4 140 225

## Description

La présente invention concerne un dispositif d'entreposage notamment pour objets de forme essentiellement plate, tels que des plaques de verre, des tôles, des panneaux de construction, mais également des produits confectionnés et des produits à entreposer en vrac. Ce dispositif, destiné à être installé sur une surface horizontale, comporte plusieurs éléments de support pour les objets à entreposer, chacun de ces éléments comprenant une structure de base essentiellement plane, légèrement inclinée par rapport à la verticale et munie d'au moins une partie de support pour ces objets.

L'invention a pour but de fournir un tel dispositif qui soit simple dans sa construction et sûr dans son fonctionnement tout en permettant l'entreposage des objets en question sur un espace minimal et une extraction aisée des objets individuels entreposés.

A cet effet, le dispositif selon l'invention présente les particularités spécifiées dans la partie caractérisante de la revendication 1. Des formes de réalisation particulières sont décrites dans les revendications 2 à 5.

Les caractéristiques, buts et avantages du dispositif selon l'invention seront mieux compris à la lumière de la description suivante d'une forme de réalisation indiquée à titre d'exemple et illustrée dans les dessins annexés, dans lequels :

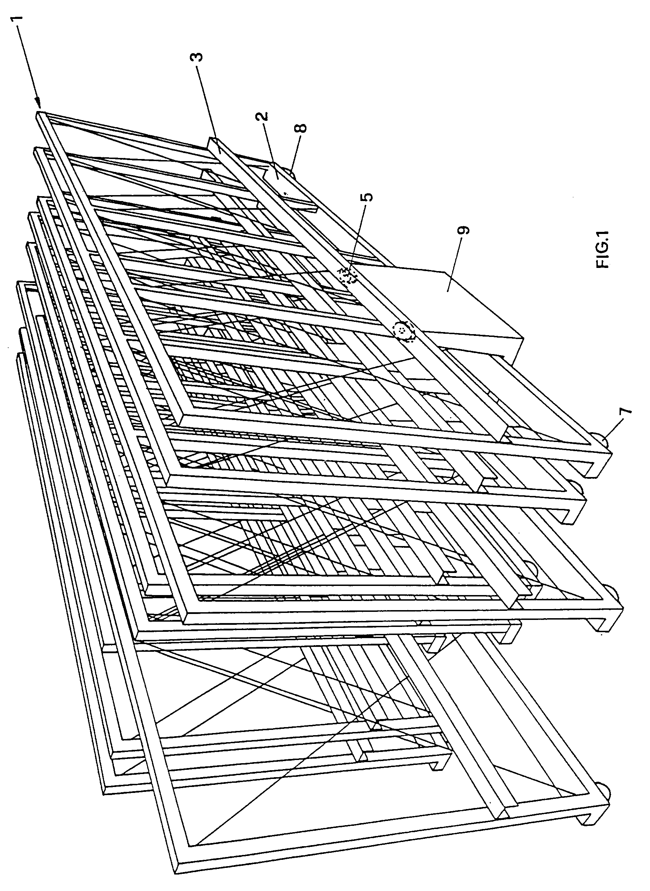

la figure 1 est une vue d'ensemble, en perspective, d'un dispositif d'entreposage selon l'invention,
la figure 2 est une vue d'ensemble latérale du dispositif selon la figure 1, et

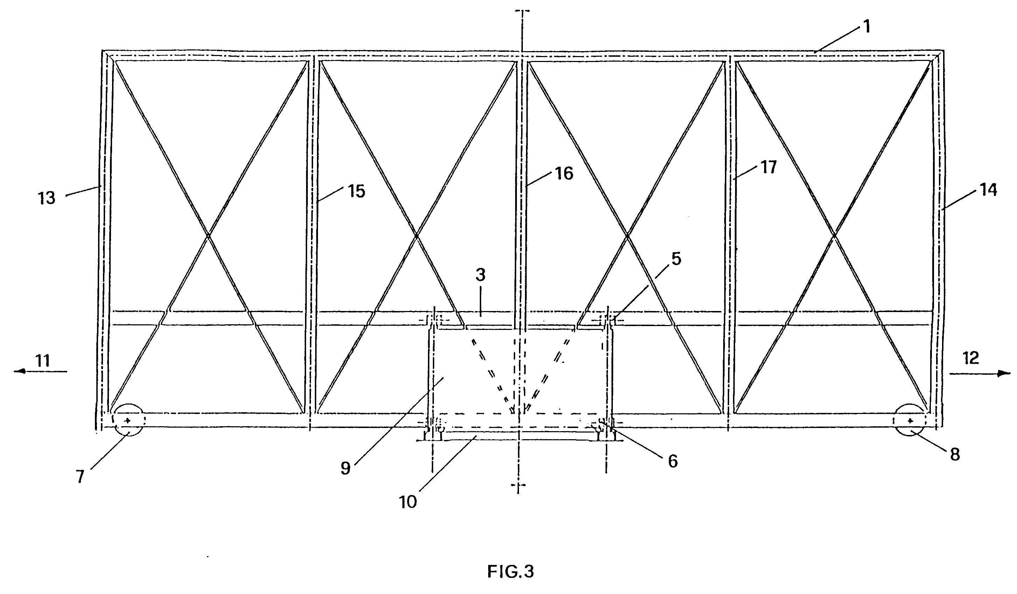

la figure 3 est une vue frontale du même dispositif.

Le présent dispositif qui est du type à cadre mobile, comporte des éléments de support mobiles 1 constitués, comme représentés à titre d'exemple dans le dessin, par des cadres légèrement inclinés par rapport à la verticale, disposés côte à côte. Chaque élément de support 1 présente un plan d'appui latéral pour les objets à entreposer et comprend une partie de support 2 en forme de console pour supporter le bord inférieur de ces objets.

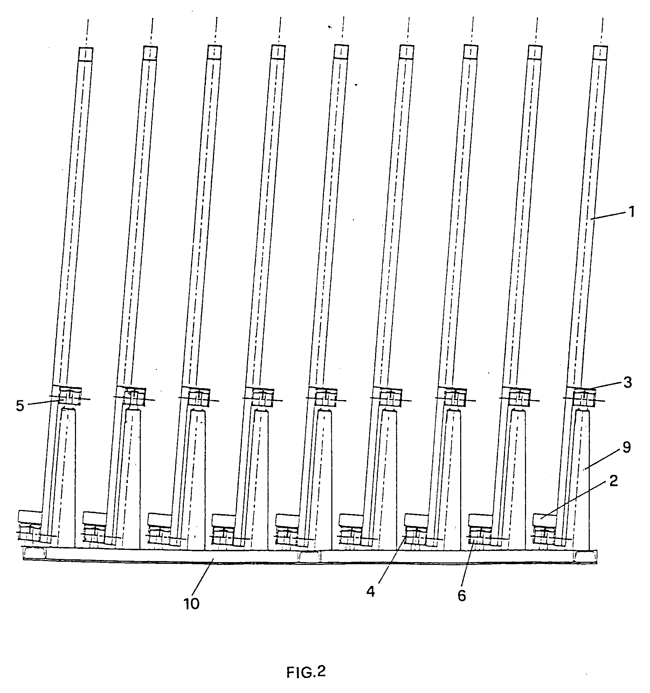

Les différents éléments de support 1 sont munis chacun de deux roues d'appui 7, 8 qui permettent le déplacement de ces éléments selon un trajet linéaire sur la surface horizontale sur laquelle est installé le dispositif d'entreposage. Ces éléments de support comportent en outre chacun deux rails de guidage 3, 4 qui sont montés, le premier à une certaine hauteur par rapport à la partie 2, et le second sous cette partie de support, en appui contre celle-ci, comme représenté à titre d'exemple à la figure 2. Ces deux rails ont un profil creux ouvert vers le bas et présentent des parois latérales parallèles.

Le présent dispositif comporte en outre une structure de guidage fixe, comportant plusieurs parties montantes 9 et une partie de base 10 qui forment un ensemble rigide fixé sur le sol représentant la surface horizontale mentionnée plus haut. Comme le montre en particulier la figure 2, des roulettes 5, 6 sont montées, d'une part sur les parties montantes 9 et, d'autre part, sur la partie de base 10 de manière à coopérer avec les rails de guidage respectifs. Les axes de ces roulettes sont essentiellement verticaux ou légèrement inclinés de façon à être parallèles aux parois latérales des rails de guidage.

Les éléments de support mobiles 1 sont ainsi guidés et maintenus dans leur position par la coopération des rails de guidage et des roulettes de la structure fixe, leur poids étant supporté par les roues 7, 8. Tout effort de torsion est éliminé par la disposition décrite. Les éléments de support sont mobiles dans les deux sens indiqués par les flèches 11, 12 et permettent un accès extrêmement facile aux objets entreposés placés sur ces éléments.

Selon une forme d'exécution non représentée, les éléments mobiles 1 peuvent être pourvus de montants d'extrémité 13, 14 d'épaisseur plus importante que celle des montants intermédiaires 15, 16, 17, ce qui permet d'alléger la structure et de diminuer l'espacement latéral des éléments mobiles 1.

Il est à noter que la structure de base qui est de préférence en forme de cadre, peut être munie de plusieurs parties de support, par exemple sous forme d'étagères ou de moyens de suspension, pour permettre l'entreposage d'objets se présentant en vrac ou de produits semi-finis, tels que des profilés, barres, tubes, etc..

Le déplacement des éléments mobiles 1 peut être effectué manuellement par un opérateur, ou mécaniquement à l'aide d'un moyen approprié tel que par exemple des moteurs électriques agissant sur les roues 7, 8, ou à l'aide de pistons hydrauliques ou pneumatiques, ou encore à l'aide d'une crémaillère fixée sur l'élément mobile et entraînée par un pignon monté sur la structure fixe.

Différentes variantes de construction peuvent être envisagées dans le cadre de la présente invention tout en utilisant les éléments essentiels caractérisant celle-ci.

## Revendications

1. Dispositif d'entreposage comportant plusieurs éléments de support (1) pour des objets à entreposer, chacun de ces éléments comprenant une structure de base essentiellement plane, légèrement inclinée par rapport à la verticale et munie d'au moins une partie de support (2) pour ces objets, caractérisé en ce que les éléments de support (1) sont munis chacun d'au moins deux roues d'appui (7,8) agencées pour permettre leur déplacement linéaire sur une surface horizontale, et comportent deux rails de guidage (3,4) disposés horizontalement, à une certaine distance verticale l'un de l'autre, de part et d'autre du plan de ladite structure de base, le dispositif comportant une structure de guidage fixe (9,10) munie de roulettes (5,6) agencées pour coopérer avec lesdits rails de façon à maintenir chaque élément de support dans sa position lors dudit déplacement.

2. Dispositif selon la revendication 1 caractérisé en ce que lesdits rails de guidage (3,4) ont un profil creux déterminant des parois latérales opposées, lesdites roulettes étant disposées entre lesdites parois latérales et ayant des axes essentiellement verticaux ou légèrement inclinés.

3. Dispositif selon les revendications 1 ou 2, caractérisé en ce que la structure de guidage comporte des parties montantes (9) fixées sur une partie de base (10).

4. Dispositif selon la revendication 3, caractérisé en ce que lesdites roulettes (5,6) sont montées, d'une part sur lesdites parties montantes (9) et, d'autre part, sur la partie de base (10).

5. Dispositif selon l'une des revendications précédentes, caractérisé en ce que les éléments de support (1) sont réalisés sous forme de cadres et comportent une partie de support (2) en forme de console.

## Claims

1. Storing device comprising several support members (1) for objects to be stored, each of these members comprising a substantially plane base structure, slightly inclined with respect to the vertical and provided with at least one support part (2) for these objects, characterized in that the support members (1) are each provided with at least two supporting wheels (7,8) arranged for permitting a linear movement of the said members on a horizontal surface, and comprise two guiding rails (3,4) disposed horizontally, at a certain vertical distance from each other, on either side of the plane of the said base structure, the device comprising a stationary guiding structure (9,10) provided with rollers (5,6) arranged for co-operation with the said rails so as to maintain each support member in its position during the said movement.

2. Device according to claim 1, characterized in that the said guiding rails (3,4) have a hollow profile determining opposite side walls, said rollers being arranged between the said side walls and having substantially vertical or slightly inclined axes.

3. Device according to claim 1 or 2, characterized in that the guiding structure comprises rising parts (9) fastened on a base part (10).

4. Device according to claim 3, characterized in that the said rollers (5,6) are mounted, on the one hand, on the said rising parts (9) and, on the other hand, on the base part (10).

5. Device according to one of the preceeding claims, characterized in that the support members (1) are made in the form of frames and comprise a support part (2) in the form of a bracket.

## Patentansprüche

1. Lagereinrichtung mit mehreren Tragelementen (1) für zu lagernde Gegenstände, wobei jedes dieser Elemente eine im wesentlichen ebene Grundstruktur enthält, die leicht geneigt gegenüber der Vertikalen ist und mindestens ein Trägerteil (2) für diese Gegenstände aufweist, dadurch gekennzeichnet, dass die Tragelemente (1) jeweils mit mindestens zwei Stützrädern (7, 8) versehen sind, die so ausgebildet sind, dass sie eine lineare Bewegung auf einer horizontalen Fläche ermöglichen, und die Tragelemente zwei Führungsschienen (3, 4) aufweisen, die horizontal in einem bestimmten vertikalen Abstand voneinander zu beiden Seiten der Ebene der genannten Grundstruktur angeordnet sind, wobei die Einrichtung eine feststehende Führungsanordnung (9, 10) aufweist, die mit Rollen (5, 6) versehen ist, welche so ausgebildet sind, dass sie mit den genannten Schienen zusammenwirken, um jedes Tragelement während der genannten Bewegung in seiner Stellung zu halten.

2. Einrichtung nach Patentanspruch 1, dadurch gekennzeichnet, dass die genannten Führungsschienen (3, 4) ein Hohlprofil aufweisen, welches einander gegenüberliegende Seitenwände ergibt, wobei die genannten Rollen zwischen diesen Seitenwänden angeordnet sind und im wesentlichen vertikale oder leicht geneigte Achsen besitzen.

3. Einrichtung nach den Patentansprüchen 1 oder 2, dadurch gekennzeichnet, dass die Führungsstruktur aufrechte Teile (9) besitzt, die auf einem Grundteil (10) befestigt sind.

4. Einrichtung nach Patentanspruch 3, dadurch gekennzeichnet, dass die genannten Rollen (5, 6) einerseits auf den genannten aufrechten Teilen (9) und andererseits auf dem Grundteil (10) angebracht sind.

5. Einrichtung nach einem der vorhergehenden Patentansprüche, dadurch gekennzeichnet, dass die Tragelemente (1) als Rahmen ausgebildet sind und ein Trägerteil (2) in der Form einer Konsole aufweisen.
